Europäisches Patentamt

European Patent Office

Office européen des brevets

(19)

(11) Veröffentlichungsnummer: **0 249 689**
**B1**

(12) **EUROPÄISCHE PATENTSCHRIFT**

(45) Veröffentlichungstag der Patentschrift: **27.12.90**

(51) Int. Cl.⁵: **G 01 F 1/66**

(21) Anmeldenummer: **87104390.7**

(22) Anmeldetag: **25.03.87**

(54) **Messwertgeber zur Bestimmung der Durchflussmenge einer strömenden Flüssigkeit.**

(30) Priorität: **17.06.86 CH 2439/86**

(43) Veröffentlichungstag der Anmeldung:
**23.12.87 Patentblatt 87/52**

(45) Bekanntmachung des Hinweises auf die
Patenterteilung:
**27.12.90 Patentblatt 90/52**

(84) Benannte Vertragsstaaten:
**AT CH DE FR LI NL**

(56) Entgegenhaltungen:
**EP-A-0 048 791**
**WO-A-86/02723**
**US-A-4 140 012**

(73) Patentinhaber: **Landis & Gyr Betriebs AG**
**CH-6301 Zug (CH)**

(72) Erfinder: **Hauenstein, Günther**
**Luisantring 92**
**D-6457 Maintal 3 (DE)**

(74) Vertreter: **Müller, Hans-Jürgen, Dipl.-Ing. et al**
**Müller, Schupfner & Gauger Maximilianstrasse 6**
**Postfach 10 11 61**
**D-8000 München 1 (DE)**

Courier Press, Leamington Spa, England.

**Beschreibung**

Die Erfindung bezieht sich auf einen Meßwertgeber der im Oberbegriff des Anspruchs 1 genannten Gattung.

Meßwertgeber dieser Art werden zur Bestimmung einer Durchflußmenge einer strömenden Flüssigkeit mittels Ultraschall verwendet.

Auf der EP—048 791 ist ein Ultraschalldurchflußmesser bekannt, der ein Ultraschall reflektierendes Meßrohr als Wellenleiter aufweist, dessen Stirnkanten außen angeschrägt sind.

Die DE—C—32 11 021 zeigt einen Meßwerteber, der eine strömungstechisch günstigeres Gehäuse aufweist und dessen Ultraschall reflektierendes Meßrohr auf der Außenseite wenigstens teilweise mit einem Ultraschall absorbierenden Belag überzogen ist, um den in den Außenraum abgestrahlten Ultraschall zu vernichten.

Schließlich sind auch Meßwertgeber mit eine Ultraschall absorbierenden Meßrohr aus z.B. Polysulfon aus der WO—86/02723 bekannt, dessen Spezialgehäuse im Bereich der beiden Ultraschallerzeuger trichterartig aufgeweitet ist, wobei das Ultraschall absorbierende Meßrohr beidseitig in das aufgeweitete Gehäuseteil hineinragen kann. Die Verwendung solcher Spezialgehäuse ist jedoch unerwünscht.

Charakteristisch für diese Messwertgeber ist eine temperaturabhängiger Messfehler, der die minimale, mit vorgegebener Genauigkeit messbare Durchflussmenge festlegt.

Der Erfindung liegt die Aufgabe zugrunde, das Verhältnis grösster zur kleinster Durchflussmenge bei vorgegebener Messgenauigkeit zu verbessern durch Beseitigung der Ursachen diese temperaturabhängigen Messfehlers.

Eine genaue Analyse der Schallabstrahlungsbedingungen der akustischen Messwandler führte auf die Lösung der Aufgabe durch die Merkmale des Anspruchs 1.

Nachfolgend werden einige Ausführungsbeispiele der Erfindung anhand der Zeichungen näher beschrieben.

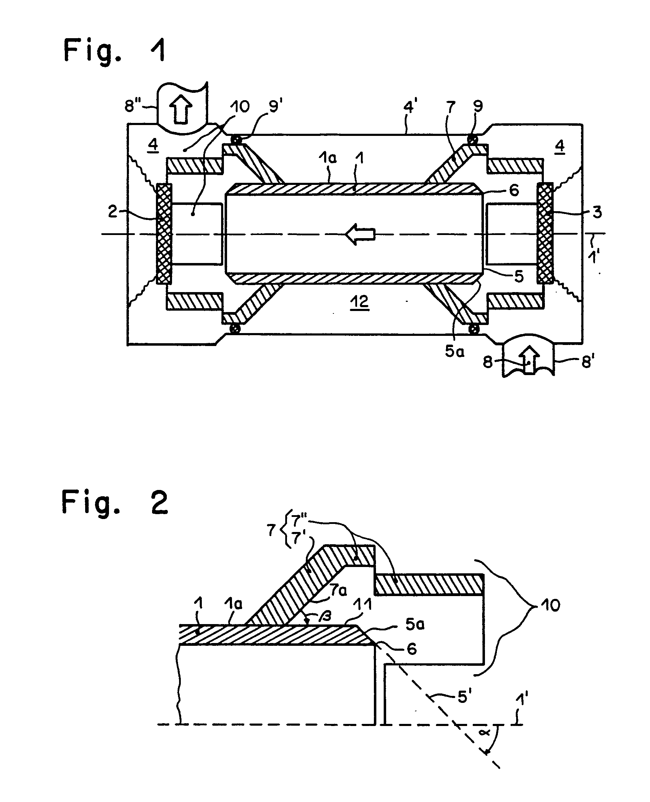

Es zeigen: Fig. 1 einen Schnitt durch einen Messwertgeber,

Fig. 2 ein Detail aus der Fig. 1,

Fig. 3a und 3b Ausführungsformen einer Blende aus Ultraschall reflektierendem Material,

Fig. 4 eine Ausführungsform mit einer Ultraschall absorbierenden Blende im Schnitt und

Fig. 5 einen Schnitt durch einen gegenüber der Fig. 1 abweichend gestalteten Messwertgeber.

Ein Messwertgeber besteht gemäss Figur 1 aus einem Messrohr 1 mit einer Aussenfläche 1a und einer Mittelachse 1', Messwandlern 2 und 3 für Ultraschallimpulse, zwei Verteilkammern 4 und bei beiden Enden 5 des mit einer Stirnkante 6 angedrehten Messrohres 1 aufgesteckten Blenden 7. Die beiden Verteilkammern 4 sind nur über das Messrohr 1 hydraulisch miteinander verbunden. Die Mittelachse 1' ist zugleich die Mittelachse der Blenden 7 und ein Lot auf das Zentrum der aktiven Uebertragungsfläche der akustischen Messwandler 2 und 3. Pfeile 8 zeigen eine mögliche Durchflussrichtung des zu messenden Mediums an. Die Zuführung erfolgt über einen Anschlussstutzen 8' und die Wegleitung über einen Anschlussstutzen 8''. Hydraulische Nebenschlüsse zur Messstrecke werden durch Dichtringe 9 und 9' aus einem Ultraschall absorbierenden Material, wie z.B. Gummi, zwischen den Blenden 7 und einer beide Vertailkammern 4 verbindende Gehäusewand 4' verhindert.

Damit die von den Messwandlern 2 und 3 beim Empfang zurückgeworfenen Ultraschallwellen an den Stirnseiten des Messrohres 1 nicht reflektiert werden, ist die Wandstärke des Messrohres 1 an beiden Enden 5 derart verringert, dass an jedem Ende 5 je eine konische Fläche 5a und eine das Messrohr 1 begrenzende Stirnkante 6 entstehen. Siehe Figure 2! Besonders wirkungsvoll ist die konische Fläche 5a, wenn eine verlängert gedachte Matellinie 5' der konischen Fläche 5a die Mittellinie 1' ausserhalb des Messrohres 1 mit einem Winkel α zwischen 20 Grad und 40 Grad schneidet. Weitere den Messvorgang störende Reflexionen entstehen an Innenwänden des Gehäuses 4' durch die von den Messwandlern 2 und 3 in diesem Raum ausserhalb des Messrohres 1 gestrahlten Ultraschallwellen. Die Bleiben 7 verhindern eine unterwünschte Beschallung des Raumes ausserhalb des Messrohres 1.

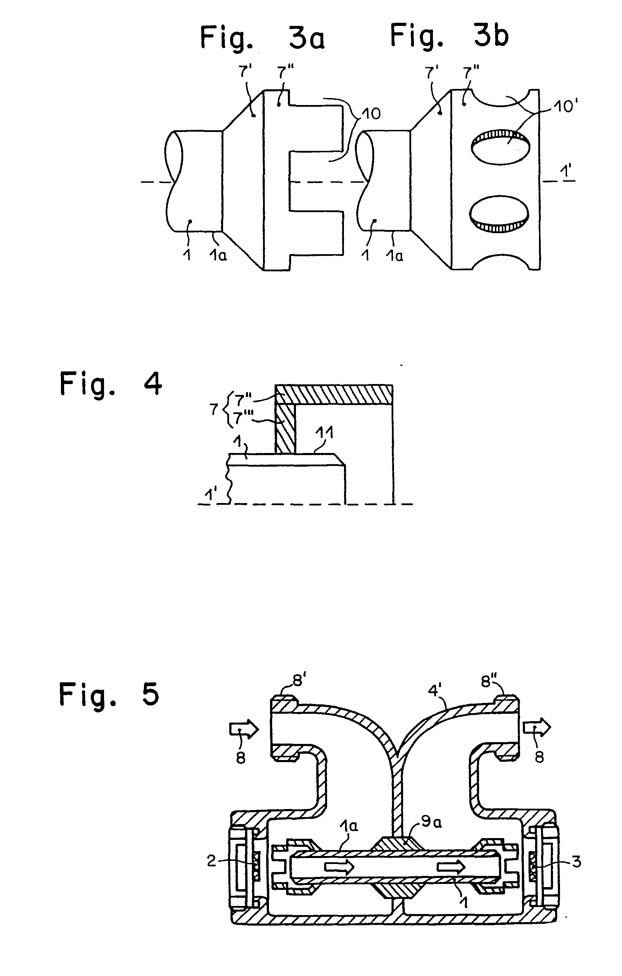

Blenden 7 aus Ultraschall reflektierendem Material, wie z.B. PVDF, sind als sich gegen die Messwandler 2 und 3 öffnende Trichter gestaltet (Fig. 2). Die Blenden 7 bestehen aus einem konischen Teil 7' und einem zylindrischen Teil 7''. Der Zylindrische Teil 7'' weist Schlitze 10 (Figur 3a), Löchur 10' (Figur 3b) oder andere Durchbrüche auf, damit der Strom der zu messenden Flüssigkeit im Messrohr 1 durch die Blenden 7 nicht behindert wird. Vorteilhaft könnte der zylindrische Teil 7'' zumindest teilweise als Sieb oder Jalusie ausgestaltet sein, oder die Flüssigkeit wird durch eine kreisförmige Lücke zwischen den Messwandlern 2 und 3 und dem zylindrischen Teil 7'' der Blenden 7 geführt. In die Blenden 7 ragt ein Teil 11 der zylindrischen Aussenfläche 1a des Messrohres von 10 mm bis 25 mm Länge hinein. Die Blenden 7 sitzen ultraschalldicht auf dem Messrohr 1 auf.

Die Innenwand 7a des konischen Teils 7' der Blenden 7 ist so gestaltet, dass der auftreffende Ultraschall mehrfach zwischen dem zylinderischen Teil 11 der Aussenwand 1a und der Innenwand 7a hin und her reflektiert wird, und die Ultrashallenergie abgebaut wird, damit keine störende Reflexionen in die Messwandler 2 und 3 zurückgelangen (Fig. 2). Diese Bedingungen werden dann erfüllt, wenn der Schnitt der Innenwand 7a und der Schnitt des zylindrischen Teils 11 mit einer die Mittelachse 1' enthaltenden Ebene eine spitzen Winkel β einschliessen. Besonders wirkungsvoll haben sich Werte für den Winkel β zwischen 20 Grad und 40 Grad erwiesen.

Werden Ultraschall absorbierende Materialien wie z.B. Gummi für die Blenden 7 verwendet oder die Blenden 7 damit überzogen, kann für den Winkel β auch Werte eines stumpfen Winkels gewählt werden. Insbesondere wird die an die Blenden 7 gestellte Aufgabe auch für den Wert β = 90 Grad erfüllt; der konische Teil 7' der Blenden 7 wird dabei zu einem scheibenförmigen Teil 7''' (Figur 4).

Die Abmessungen der Blenden 7 sind so zu wählen, dass die von den Messwandlern 2 und 3 abgestrahlten Ultraschallwellen von der Blende 7 und dem Messrohr 1 vollständig aufgefangen werden, und dass allfällig durch die Durchbrüche 10 bzw. 10' in die Verteilkammern 4 abgestrahlte Ultraschallwellen nicht mehr in die Messwandler 2 oder 3 reflektiert werden. Die Figur 1 zeigt eine von vielen Gestaltungsmöglichkeiten des Gehäuses 4' des Messwertgebers. Insbesondere sind die radialen Anschlussstutzen 8' und 8'', die nur der zeichnerischen Darstellung wegen in einer Ebene gezeichnet sind, auch schwenkbar um die Mittelachse 1' denkbar, falls beispielsweise die eine Verteilkammer 4 um die Mittelachse 1' drehbar konstruiert ist. Der zwischen der Gehäusewand 4' Messwertgebers und dem Messrohr 1 eingeschlossene Zwischenraum 12 kann mit Luft, mit Gummi (z.B. anstelle der Dichtungen 9 und 9') oder mit Wasser gefüllt werden. Bei einer Wasserfüllung kann eine der Dichtungen 9 und 9' durch einen wasserdurchlässigen Stützring aus dem gleichen Material ersetzt werden.

Ist die dem Anschlussstutzen 8', dem Zulauf des Mediums, zugewandte Blende 7 mit einem grösseren Aussendurchmesser als die andere Blende 7 gestaltet, ergeben sich Vorteile für die Herstellung und Montage des Messwertgebers.

Das neu gestaltete Messrohr 1 mit den Blenden 7 kann auch in ein Gehäuse nach DE—PS 32 11 021 eingebaut werden. In der Fig. 5 sind gleiche Teile wie in der Fig. 1 mit den gleichen Bezugszeichen versehen. Die Abdictung der hydraulischen Nebenschlüsse erfolgt dabei am zweckmässigsten in der Mitte der Aussenwand 1a des Messrohres 1 mit einer Dichtung 9a aus Ultraschall absorbierenden Materialien, wie z.B. Gummi, z.B. in Form einer Stopfbuchse oder eine Rundgummidichtung.

**Patentansprüche**

1. Meßwertgeber zur Bestimmung der Durchflußmenge einer durch ein Rohrsystem strömenden Flüssigkeit durch Messung der Laufzeit von Ultraschall innerhalb der eine Ultraschall reflektierendes Meßrohr (1) durchströmenden Flüssigkeit, mit zwei mit der Flüssigkeit in unmittelbarer Berührung stehenden Meßwandlern (2; 3), von denen je ein Meßwandler (2; 3) in je einer von zwei einzig durch das Meßrohr (1) miteinander verbundenen Vertailkammern (4) in einem Gehäuse (4) in einem Abstand von den freien mit Stirnkanten (6) versehen Enden (5) des Meßrohrs (1) angeordnet ist, wobei die Mittelachse (1') der vom Meßsrohr gebildeten Meßstrecke zugleich ein Lot durch das Zentrum der aktiven Übertragungsfläche der Meßwandler (2; 3) ist und wobei der Querschnitt der Meßstrecke im Meßrohr (1) auf der ganzen Länge gleich ist, dadurch gekennzeichnet, daß auf jedem der beiden Enden (5) je eine trichterförmige, sich gegen den Meßwandler (2; 3) öffnende Blende (7) ultraschalldicht und koaxial auf das Meßrohr (1) im Abstand vom Gehäuse (4') aufgesetzt ist.

2. Meßwertgeber nach Anspruch 1, dadurch gekennzeichnet, daß jedes der beiden Enden (5) des Meßrohrs (1) in seine Blende (7) hineinragt, daß das Meßrohr (1) an beiden Enden (5) eine konische Fläche (5a) aufweist und daß zusätzlich zu dieser ein in die Blende (7) hineinragender zylindrischer Teil (11) des Meßrohrs (1) mi voller Wandstärke eine Länge von 10 bis 25 mm aufweist.

3. Meßwertgeber nach Anspruch 1 oder 2, dadurch gekennzeichnet, daß die Blenden (7) einen zylindrischen Teil (7'') aufweisen.

4. Meßwertgeber nach Anspruch 3, dadurch gekennzeichnet, daß der zylindrische Teil (7'') der Blenden (7) Schlitze (10), Löcher (10') oder andere Durchbrüche für den Durchlaß der zu messenden Flüssigkeit enthält.

5. Meßwertgeber nach Anspruch 3 oder 4, dadurch gekennzeichnet, daß die Blenden (7) aus einem Ultraschall reflektierenden Material bestehen.

6. Meßwertgeber nach Anspruch 5, dadurch gekennzeichnet, daß in einer die Mittelachse des Meßrohrs (1) enthaltenden Ebene der Schnitt der Innenwand (7a) eines konischen Teils (7') der Blenden (7) mit dem Schnitt der Außenwand (1a) des zylindrischen Teils (11) des Meßrohrs (1) einen spitzen Winkel (β) zwischen 20 Grad und 40 Grad bildet.

7. Meßwertgeber nach Anspruch 3 oder 4, dadurch gekennzeichnet, daß die Blenden (7) aus einem Ultraschall absorbierenden Material bestehen oder mit diesem Material beschichtet sind.

8. Meßwertgeber nach Anspruch 7, dadurch gekennzeichnet, daß die Blenden (7) aus einem scheibenförmigen Teil (7''') und einem zylindrischen Teil (7'') bestehen, von denen der scheibenförmige Teil (7''') mit Außenwand des zylindrischen Teils (11) des Meßrohrs (1) einen Winkel (β) von etwa 90 Grad bildet.

8. Meßwertgeber nach einem der vorhergehenden Ansprüche, dadurch gekennzeichnet, daß die beiden Blenden (7) unterschiedliche Größen aufweisen.

9. Meßwertgeber nach einem der vorhergehenden Ansprüche, dadurch gekennzeichnet, daß wenigstens ein Anschlußstutzen (8'; 8'') um die Mittelachse (1') des Meßrohrs (1) schwenkbar ist.

10. Meßwertgeber nach einem der vorhergehenden Ansprüche, dadurch gekennzeichnet, daß wenigstens ein Anschlußstutzen (8'; 8'') um die Mittelachse (1') des Meßrohrs (1) schwenkbar ist.

**Revendications**

1. Capteur de mesure pour la détermination du débit d'une liquide s'écoulant dans un système tubulaire, par mesure du tempts de propagation d'ultrasons dans un liquide s'écoulant dans un tube de mesure 1 réfléchissant les ultrasons, comportant deux convertisseurs de mesure (2; 3), en contact direct avec le liquide, parmi lesquels

un convertisseur de mesure respectif (2; 3) est disposé dans l'une de deux chambres de répartition (4), reliées entre elles uniquement par le tube de mesure (1) et situées dans un carter (4) en étant espacées des extrémités libres (5), pourvues d'arêtes frontales (6), du tube de mesure (1), l'axe central (1') de la voie de mesure constituée par le tube de mesure étant simultanément une perpendiculaire passant par le centre de la surface active de transmission des convertisseurs de mesure (2; 3) et la section droite de la voie de mesure dans le tube mesure (1) étant constante sur toute sa longueur, caractérisé en ce que, à chacune des deux extrémités (5), il est prévu respectivement un diaphragme (7) en forme d'entonnoir, s'ouvrant en direction du convertisseur de mesure (2; 3) et engagé de façon étanche aux ultrasons et coaxialement sur le tube de mesure (1) à distance du carter (4').

2. Capteur de mesure selon la revendication 1, caractérisé en ce que chacune des deux extrémités (5) dy tube de mesure (1) pénètre dans son diaphragme (7), en ce que le tube de mesure (1) comporte aux deux extrémités (5) une surface conique (5a) et en ce que, en addition à celle-ci, une partie cylindrique (11) du tube de mesure, de pleine épaisseur de paroi et pénétrant dans le diaphragme (7), a une longueur comprise entre 10 et 25 mm.

3. Capteur de mesure selon la revendication 1 ou 2, caractérisé en ce que les diaphragmes (7) comportent une partie cylindrique (7'').

4. Capteur de mesure selon la revendication 3, caractérisé en ce que la partie cylindrique (7'') des diaphragmes (7) comporte des fentes (10), des trous (10') ou d'autres évidements pour le passage du liquide à mesurer.

5. Capteur de mesure selon la revendication 3 ou 4, caractérisé en ce que les diaphragmes (7) se composent d'un matériau réfléchissant les ultrasons.

6. Capteur de mesure selon la revendication 5, caractérisé en ce que, dans un plan contenant l'axe central du tube de mesure (1), la perpendiculaire à la paroi intérieure (7a) d'une partie conique (7') des diaphragmes (7) fait avec la perpendiculaire à a paroi extérieure (1a) de la partie cylindrique (11) du tube de mesure (1) un angle aigu (B) compris entre 20 degrés et 40 degrés.

7. Capteur de mesure selon la revendication 3 ou 4, caractérisé en ce que les diaphragmes (7) se composent d'un matériau absorbent les ultrasons ou bien sont revêtus de ce matériau.

8. Capteur de mesure selon la revendication 7, caractérisé en ce que les diaphragmes (7) se composent d'une partie (7''') en forme de disque et d'une partie cylindrique (7''), parmie lesquelles la partie (7''') en forme de disque fait, avec la paroi extérieure de la partie cylindrique (11) du tube de mesure (1), un angle (β) d'environ 90 degrés.

9. Capteur de mesure selon une des revendications précédentes, caractérisé en ce que les deux diaphragmes (7) ont des grosseurs différentes.

10. Capteur de mesure selon une des revendications précédentes, caractérisé en ce qu'au moins une tubulure de raccordement (8'; 8'') peut pivoter autour de l'axe central (1') du tube de mesure (1).

**Claims**

1. A measuring sensor for determining the quantitative flow rate of a liquid flowing through a pipe system by measuring the transit time of ultrasound within the liquid which flows through an ultrasound-reflecting measuring pipe (1), comprising two measuring transducers (2; 3) which are in direct contact with the liquid and of which a respective measuring transducer (2; 3) is arranged in a respective one of two distributor chambers (4) which are communicated with each other solely by way of the measuring pipe (1), in a housing (4) at a spacing from the free ends (5) of the measuring pipe (1), which ends are provided with end edges (6), wherein the centre line (1') of the measuring section formed by the measuring pipe is at the same time a perpendicular line through the centre of the active transmission surface of the measuring transducers (2; 3) and wherein the cross-section of the measuring section in the measuring pipe (1) is the same over the entire length, characterised in that a respective funnel-shaped shield member (7) which opens towards the respective measuring transducer (2; 3) is fitted in ultrasound-tight and coaxial relationship on to the measuring pipe (1) on each of the two ends (5) at a spacing from the housing (4').

2. A measuring sensor according to claim 1 characterised in that each of the two ends (5) of the measuring pipe (1) extends into its shield member (7), that the measuring pipe (1) has a conical surface (5a) at both ends (5) and that in addition to the conical surface of a cylindrical portion (11), which extends into the shield member (7), of the measuring pipe (1) with its full wall thickness is of a length of 10 to 25 mm.

3. A measuring sensor according to claim 1 or claim 2 characterised in that the shield members (7) have a cylindrical portion (7'').

4. A measuring sensor according to claim 3 characterised in that the cylindrical portion (7'') of the shield members (7) has slots (10), holes (10') or other through apertures for the liquid to be measured to pass therethrough.

5. A measuring sensor according to claim 3 or claim 4 characterised in that the shield members (7) comprise an ultrasound-reflecting material.

6. A measuring sensor according to claim 5 characterised in that in a phase containing the centre line of the measuring pipe (1) the section of the inside wall (7a) of a conical portion (7') of the shield members (7) forms an acute angle (β) of between 20° and 40° with the section of the outside wall (1a) of the cylindrical portion (11) of the measuring pipe (1).

7. A measuring sensor according to claim 3 or claim 4 characterised in that the shield members (7) comprise or are coated with an ultrasound-absorbent material.

8. A measuring sensor according to claim 7 characterised in that the shield members (7) comprise a disc-like portion (7''') and a cylindrical portion (7'') of which the disc-like portion (7''') forms an angle (β) of about 90° with the outside wall of the cylindrical portion (11) of the measuring pipe (1).

9. A measuring sensor according to one of the preceding claims characterised in that the two shield members (7) are of different sizes.

10. A measuring sensor according to one of the preceding claims characterised in that at least one connecting portion (8'; 8'') is pivotable about the centre line (1') of the measuring pipe (1).

# Fig. 1

# Fig. 2

# Fig. 3a    Fig. 3b

# Fig. 4

# Fig. 5